# EUROPEAN PATENT APPLICATION

(11) **EP 4 645 127 A1**
(43) Date of publication of application: **05.11.2025**
(21) Application number: 25173647.6
(22) Date of filing: 30.04.2025
(51) Int. Cl.: G06F 21/30, H04L 9/32, H04L 9/40, H04W 12/06, G06F 21/10, H04W 12/08, H04L 65/403, H04N 7/15, H04N 21/439, H04L 12/18

(54) **COMMUNICATION SYSTEM WITH CONFERENCE CONTROL AND RELATED METHOD**

(30) Priority: 30.04.2024 EP 24173624; 02.05.2024 DK PA202470132
(71) Applicant: GN Hearing A/S, 2750 Ballerup (DK)
(72) Inventor: DREILING, Philippe, DK-2750 Ballerup (DK); BJØRSTRUP, Hans Henrik, DK-2750 Ballerup (DK)
(74) Representative: Aera A/S

(57) **Abstract**

An electronic device and a method of of controlling a conference between a first communication device and a second communication device is disclosed, the method comprising setting up a conference with associated conference requirements; receiving a participation request to participate in the conference from the second communication device, the participation request comprising a device configuration indicative of one or more devices associated with a participant in the conference; determining whether the device configuration satisfies the conference requirements; and in accordance with the device configuration satisfying the conference requirements, including the second communication device in the conference.

## Description

The present disclosure relates to a communication system, devices of a communication system including an electronic device, and related methods including a method of controlling a conference.

### BACKGROUND

The developments of communication systems for audio and/or video conferencing and artificially generated voice and/or video also known as deep faking presents new challenges for users participating in such audio and/or video conferences as it can be difficult to trust whether a real person or merely a deep faked version of the person is participating.

### SUMMARY

Accordingly, there is a need for systems, devices, and methods with improved handling of conferences to improve security.

A method, such as a method of controlling a conference, e.g. between a first communication device and a second communication device, is disclosed, the method comprising setting up a conference with associated conference requirements, e.g. by transmitting a conference invitation or conference request comprising conference requirements; receiving a participation request to participate in the conference from the second communication device, the participation request comprising a device configuration indicative of one or more devices associated with a participant in the conference; determining whether the device configuration satisfies the conference requirements; and in accordance with the device configuration satisfying the conference requirements, including the second communication device in the conference.

An electronic device, such as a communication device, is disclosed, the electronic device comprising an interface, memory circuitry and processor circuitry, the processor circuitry configured to set up a conference with associated conference requirements; receive a participation request to participate in the conference from the second communication device, the participation request comprising a device configuration indicative of one or more devices associated with a participant in the conference; determine whether the device configuration satisfies the conference requirements; and in accordance with the device configuration satisfying the conference requirements, include the second communication device in the conference.

It is an advantage of the present disclosure that the method and electronic device provides improved control and security of conferences.

Advantageously, the present disclosure allows for control/verification of participants and/or devices used in a conference which in turn reduces the risk of impersonation attacks being successful.

Further, the risk of deep fake attacks being successful is highly reduced. In other words, the present disclosure provides improved protection against impersonation attacks, such as deep fakes.

### BRIEF DESCRIPTION OF THE DRAWINGS

The above and other features and advantages of the present invention will become readily apparent to those skilled in the art by the following detailed description of exemplary embodiments thereof with reference to the attached drawings, in which:
Fig. 1 schematically illustrates an exemplary communication system according to this disclosure, and
Fig. 2 is a flow diagram of an exemplary method according to this disclosure.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

A communication system and devices thereof are disclosed. For example, electronic devices such as communication devices and or audio devices for a communication system are disclosed. Further, methods of operating an electronic device such as methods for operating a communication device and methods for operating an audio device are disclosed.

The present disclosure allows for improved security in a conference by only allowing participants having a valid device setup into the conference. For example, an organizer of a conference is able to control the setup used by participants, e.g. such that only participants using a headset and not a tabletop audio device can join the conference.

The present disclosure allows for improved control of a conference or communication session, such as a teleconference and or video conference.

As used herein, the term "key" refers to a cryptographic key, i.e. a piece of data, (e.g. a string, a parameter) that determines a functional output of a cryptographic algorithm. For example, during encryption, the key allows a transformation of a plaintext into a cipher-text and vice versa during decryption. The key may also be used to verify a digital signature and/or a message authentication code, MAC. A key is so called a symmetric key when the same key is used for both encryption and decryption. **In** asymmetric cryptography or public key cryptography, a keying material is a key pair, so called a private-public key pair comprising a public key and a private key. **In** an asymmetric or public key cryptosystem (such as Rivest Shamir Adelman, RSA, cryptosystem, or Elliptic curve cryptography, ECC), the public key is used for encryption and/or signature verification while the private key is used for decryption and/or signature generation.

As used herein the term "identifier" refers to a piece of data that is used for identifying, such as for categorizing, and/or uniquely identifying. The identifier may be in a form of a word, a number, a letter, a symbol, a list, an array, or any combination thereof. For example, the identifier as a number may be in the form of an integer, such as unsigned integer, uint, with a length of e.g. 8 bits, 16 bits, 32 bits, etc., such as an array of unsigned integers. A device identifier may indicate or identify a device, such as a hardware identifier. A hardware identifier can include a hardware number of the audio device and/or a serial number of the audio device.

In the present context, a signature is a digital signature created by applying a digital signature scheme to data, e.g. using a digital key.

In one or more examples, the electronic device is a communication device. The communication device may be a smartphone, a tablet computer, a laptop computer, or a stationary personal computer, e.g. with a communication application installed thereon. The communication device may comprise one or more microphones and/or one or more loudspeakers also denoted receivers. The communication device may comprise one or more processors also denoted processor circuitry, and an interface. The interface of the communication device may comprise a wireless transceiver for wireless connection to other devices and/or one or more connectors for wired connection to other devices. In other words, the communication device may be configured for wired or wireless communication with an audio device. The communication device may be configured for wired or wireless communication with another communication device, e.g. via the Internet or other network connection.

In one or more examples, the electronic device is an audio device. The audio device may comprise one or more microphones and/or one or more loudspeakers also denoted receivers. The audio device may comprise one or more processors also denoted processor circuitry, and an interface. The interface of the audio device may comprise a wireless transceiver for wireless connection to other devices and/or one or more connectors for wired connection to other devices. The audio device may be configured for wired or wireless communication with the communication device.

In one or more examples, the audio device may be an earbud, speakerphone, a loudspeaker device, a microphone device, a headphone, a headset, a hearing aid, etc.

The hearing device may be a hearing aid of the behind-the-ear (BTE) type, in-the-ear (ITE) type, in-the-canal (ITC) type, receiver-in-canal (RIC) type, receiver-in-the-ear (RITE) type or microphone-and-receiver-in-the- ear (MaRIE) type. The hearing device may be a binaural hearing aid in a binaural hearing system. The binaural hearing system may comprise a first hearing aid and a second hearing aid, wherein the first hearing aid and/or the second hearing aid may be the hearing device(s) as disclosed herein.

The hearing device may be configured for wireless communication with one or more devices, such as with another hearing device, e.g. as part of a binaural hearing system, and/or with one or more accessory devices, such as a smartphone and/or a smart watch. Accordingly, the hearing device may comprise a transceiver module. The hearing device/transceiver module optionally comprises an antenna for converting one or more wireless input signals, e.g. a first wireless input signal and/or a second wireless input signal, to antenna output signal(s). The wireless input signal(s) may origin from external source(s), such as spouse microphone device(s), wireless TV audio transmitter, and/or a distributed microphone array associated with a wireless transmitter. The wireless input signal(s) may origin from another hearing device, e.g. as part of a binaural hearing system, and/or from one or more accessory devices

A method of controlling a conference, e.g. between a plurality of communication devices, such as between a first communication device and a second communication device, is disclosed, the method comprising setting up a conference with associated conference requirements; receiving a participation request to participate in the conference, e.g. from the second communication device/second participant, the participation request comprising a device configuration indicative of one or more devices, e.g. associated with a participant in the conference; determining whether the device configuration satisfies the conference requirements; and in accordance with the device configuration satisfying the conference requirements, optionally including, admitting, or accepting the second communication device/second participant in the conference.

In one or more examples, the device configuration comprises a digital signature or a plurality of digital signature, and determining whether the device configuration satisfies the conference requirements comprises verifying the digital signature(s), e.g. based on an audio device key, a video device key, and/or a communication device key.

In one or more examples, the method comprises, in accordance with the device configuration not satisfying the conference requirements, rejecting the participation request. In other words, the second communication device/second participant may not be included, admitted, or accepted in the conference if the devices used by the second participant and reflected in the device configuration do not meet the device requirements. For example, if the second participant tries to join the conference without a second audio device as required by the conference requirements, the second participant will not be included in the conference. Thereby improved control of and security for the conference is improved thereby reducing the risk of successful impersonation attacks, such as deep fake attacks.

In one or more examples, setting up a conference with associated conference requirements comprises transmitting a conference invitation comprising the conference requirements. The conference requirements may be indicative of or comprise device requirements for devices to be used in the conference.

In one or more examples, the conference requirements comprise audio device requirements of an audio device for participating in the conference, and wherein determining whether the device configuration satisfies the conference requirements comprises determining whether an audio device parameter of the device configuration satisfies the audio device requirements.

In one or more examples, the audio device requirements comprise audio device type requirements indicative of a required audio device type, and wherein determining whether the device configuration satisfies the conference requirements comprises determining whether an audio device type parameter of the device configuration satisfies the audio device type requirements.

In one or more examples, the conference requirements comprise video device requirements of a video device for participating in the conference, and wherein determining whether the device configuration satisfies the conference requirements comprises determining whether a video device parameter of the device configuration satisfies the video device requirements.

In one or more examples, the video device requirements comprise video device type requirements indicative of a required video device type, and wherein determining whether the device configuration satisfies the conference requirements comprises determining whether a video device type parameter of the device configuration satisfies the video device type requirements.

In one or more examples, the conference requirements comprise communication device requirements of a communication device for participating in the conference, and wherein determining whether the device configuration satisfies the conference requirements comprises determining whether a communication device parameter of the device configuration satisfies the communication device requirements.

In one or more examples, the communication device requirements comprise communication device type requirements indicative of a required communication device type, and wherein determining whether the device configuration satisfies the conference requirements comprises determining whether a communication device type parameter of the device configuration satisfies the communication device type requirements.

The conference device requirements may comprise one or more group identifiers, such as one or more of an audio device group identifier, a video device group identifier, and a communication device group identifier, and/or one or more organisation identifiers, such as one or more of an audio device organisation identifier, a video device organisation identifier, and a communication device organisation identifier. Determining whether the device configuration satisfies the conference requirements optionally comprises determining whether one or more group parameters and/or one or more organisation parameters of the device configuration satisfy the conference device requirements indicated by the group identifier(s) and/or organisation identifier(s). **In** other words, the organiser of the conference may be allowed to control that only devices, such as audio devices, video devices, and/or communication devices, belonging to a specific group and/or organisation will be allowed into the conference.

In one or more examples, the device configuration, such as the audio device data, comprises an audio device signature, and determining whether the device configuration satisfies the conference requirements comprises verifying the audio device signature. Thereby, parameters of the device configuration relating to the audio device can be verified.

In one or more examples, the device configuration, such as the audio device data, comprises a message authentication code, MAC, and determining whether the device configuration satisfies the conference requirements comprises verifying the message authentication code, MAC.

In one or more examples, a verified audio device signature and/or message authentication code, MAC, reduces the risk of not invited third parties can join the conference. **In** other words, a conference with participants joining the conference based on verified and/or authenticated device configuration provides improved control and/or security for the conference.

In one or more examples, the device configuration comprises an audio device identifier, the method comprising obtaining an audio device key, e.g. based on the audio device identifier, and wherein verifying the audio device signature is based on the audio device key.

Obtaining an audio device key based on the audio device identifier may comprise transmitting, e.g. to a server device, a key request including the audio device identifier and receiving the audio device key, e.g. from the server device.

In one or more examples, the device configuration comprises video device data indicative of a video device, and wherein determining whether the device configuration satisfies the conference requirements is based on the video device data.

In one or more examples, the device configuration, such as the video device data, comprises a video device signature, and wherein determining whether the device configuration satisfies the conference requirements comprises verifying the video device signature.

In one or more examples, the video device data comprises a message authentication code, MAC, and wherein determining whether the device configuration satisfies the conference requirements verifying the message authentication code, MAC.

In one or more examples, the device configuration, such as the video device data, comprises a video device identifier, the method comprising obtaining a video device key based on the video device identifier, and wherein verifying the video device signature is based on the video device key.

In one or more examples, the device configuration is based on the video device identifier.

Obtaining a video device key based on the video device identifier may comprise transmitting, e.g. to a server device, a key request including the video device identifier and receiving the video device key, e.g. from the server device.

In one or more examples, the device configuration, such as the communication device data, comprises a communication device signature, and wherein determining whether the device configuration satisfies the conference requirements comprises verifying the communication device signature.

In one or more examples, the communication device data comprises a message authentication code, MAC, and wherein determining the trust level based on the communication device data comprises verifying the message authentication code, MAC.

In one or more examples, the communication device data comprises a communication device identifier, the method comprising obtaining a communication device key, e.g. based on the communication device identifier, and wherein verifying the communication device signature is based on the communication device key.

Obtaining a communication device key based on the communication device identifier may comprise transmitting, e.g. to a server device, a key request including the communication device identifier and receiving the communication device key, e.g. from the server device.

For example, a conference requirement may indicate that use of audio device, such as use of a specific type of audio device or a specific audio device, e.g. a headset or a specific headset, is required in the conference.

For example, a conference requirement may indicate that use of video device, such as use of a specific type of video device or a specific video device, e.g. a stationary video device or a video device e.g. associated with a participant, is required in the conference.

The method may comprise controlling the conference, such as conference connections, based on whether the device configuration satisfies the conference requirements;.

In one or more examples, the media data comprises location data indicative of a device location, and wherein determining a trust level associated with the media stream comprises determining the trust level based on the location data.

In one or more examples, the location data comprises a location signature, and wherein determining the trust level based on the location data comprises verifying the location data. Verified and/or authenticated location data may increase the trust level. **In** other words, a trust level based on verified and/or authenticated location data may be higher than a trust level not based on location data. A trust level based on verified and/or authenticated location data may be higher than a trust level based on non-verified and/or non-authenticated location data. A trust level not based on location data, e.g. when the transmitting audio device does not have a signing/authentication capability, may be higher than a trust level based on non-verified and/or non-authenticated location data.

Non-verified location data may decrease the trust level. **In** one more examples, a non-verification of, e.g. failure to verify, the location data may lead to a trust level indicative of no or very low trust.

In one or more examples, verifying the location signature is based on one or more of the audio key, the video key, and the communication key.

In one or more examples, determining a trust level associated with the media stream based on the media data comprises determining an artefact parameter indicative of presence of artefacts in one or both of the audio data and the video data and determining the trust level based on the artefact parameter. An artefact parameter satisfying an artefact criterion may be indicative of a high risk of deep faking, thereby reducing the trust level, e.g. to no or low trust.

In one or more examples, the media data comprises one or more of a connection security parameter, a network identifier, and a connection identifier, and wherein determining a trust level associated with the media stream comprises determining the trust level based on one or more of the connection security parameter, a network identifier, and a connection identifier. The connection security parameter may be indicative of the security associated with one or more connections to other participants in the conference. For example, use of a public WIFI for the transmitting communication device may result in a low connection security parameter compared to use of a GPS connection for the transmitting communication device.

In one or more examples, the method comprises receiving media data associated with a media stream, the media data comprising one or both of audio data representative of audio and video data representative of video may comprise receiving, at a first communication device of a first participant, second media data and optionally third media data, the second media data associated with a second media stream from a second communication device, the second media data comprising one or both of second audio data representative of audio and second video data representative of video, the third media data associated with a third media stream from a third communication device, the third media data comprising one or both of third data representative of audio and third video data representative of video; determining one or more trust levels based on the second media data and/or the third media data; and providing an output indicative of the one or more trust levels. In other words, a plurality of trust levels may be determined and output, such as a trust level for each participant in a conference, such as an audio/tele conference or videoconference.

In one or more examples, an electronic device comprising an interface, memory circuitry and processor circuitry is provided, the processor circuitry configured to perform the method as described herein. The electronic device may be a communication device or an audio device.

In one or more examples, an electronic device is provided, the electronic device comprising an interface, memory circuitry and processor circuitry, the processor circuitry configured to receive, via the interface, media data associated with a media stream, the media data comprising one or both of audio data representative of audio and video data representative of video; determine a trust level associated with the media stream based on the media data; and provide, via the interface, an output indicative of the trust level.

In one or more examples, the electronic device is a communication device or an audio device.

It is noted that descriptions and features of electronic device functionality, such a processor circuitry configured to, also apply to methods of operating an electronic device and vice versa. For example, a description of processor circuitry configured to determine also applies to a method, e.g. of operating an electronic device, wherein the method comprises determining and vice versa.

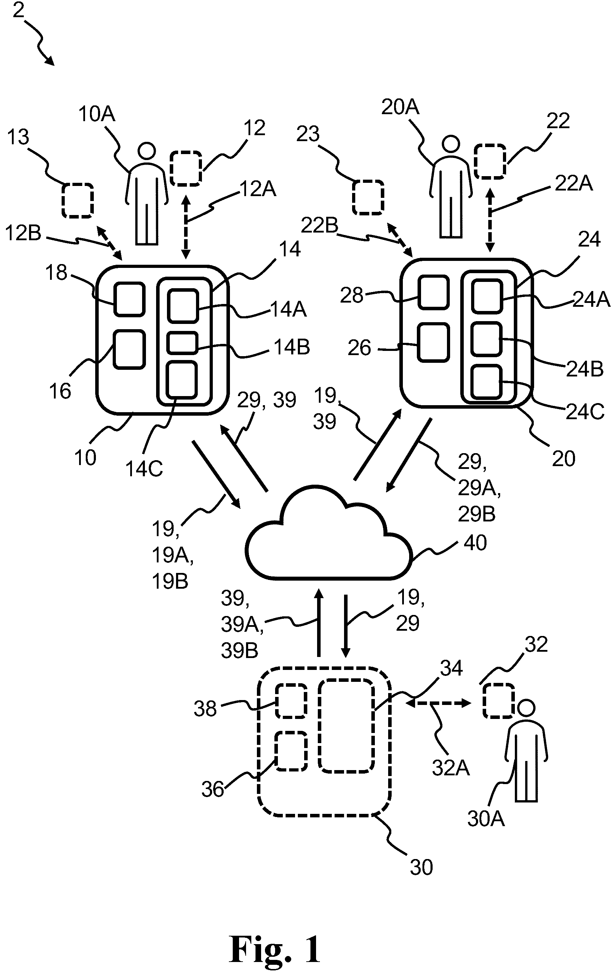

Fig. 1 shows an example communication system 2 comprising a first communication device 10 and a first audio device 12 via connection 12A (wireless and/or wired) used by first user 10A also denoted first participant, e.g. of a conference, such as audio conference or videoconference. The first communication device 10 is a communication device as described herein and comprises an interface 14, memory circuitry 16, and processor circuitry 18. The first communication device 10 is configured to, e.g. during a conference, obtain and transmit, via the interface 14, first media data 19 associated with a media stream and including first audio data 19A and first video data 19B. The first audio data 19A or at least part thereof may be obtained with one or more microphones of the first audio device 12 and transmitted to the first communication device 10 via connection 12A. The first audio data 19A or at least part thereof may be obtained with a communication microphone 14A of the interface 14 in first communication device 12. The first video data 19B or at least part thereof may be obtained with a camera of a first video device 13 and transmitted to the first communication device 10 via connection 12B (wireless and/or wired). The first video data 19B or at least part thereof may be obtained with a camera 14B of the interface 14 in first communication device 10.

The communication system 2 comprises a second communication device 20 and a second audio device 22 via connection 24 (wireless and/or wired) used by second user 20A also denoted second participant, e.g. of the conference, such as audio conference or videoconference. The second communication device 20 may be a communication device as described herein and comprises an interface 24, memory circuitry 26, and processor circuitry 28. The second communication device 20 is configured, e.g. during the conference, to obtain and transmit, via the interface 24, second media data 29 associated with a media stream and including second audio data 29A and second video data 29B. The second audio data 29A or at least part thereof may be obtained with one or more microphones of the second audio device 22 and transmitted to the second communication device 20 via connection 22A. The second audio data 29A or at least part thereof may be obtained with a communication microphone 24A of the interface 24 in second communication device 22. The second video data 29B or at least part thereof may be obtained with a camera of a second video device 23 and transmitted to the second communication device 20 via connection 22B (wireless and/or wired). The second video data 19B or at least part thereof may be obtained with a camera 24B of the interface 24 in second communication device 20.

The communication system 2 optionally comprises a third communication device 30 and a third audio device 32 via connection 34 (wireless and/or wired) used by third user 30A also denoted third participant, e.g. of the conference, such as audio conference or videoconference. The third communication device 30 may be a communication device as described herein and comprises an interface 34, memory circuitry 36, and processor circuitry 38. The third communication device 30 is configured to, e.g. during the conference, obtain and transmit, via the interface 34, third media data 39 associated with a media stream and including third audio data 39A and third video data 39B. The third audio data 39A or at least part thereof may be obtained with one or more microphones of the third audio device 32 and transmitted to the third communication device 30 via connection 32A. The third audio data 39A or at least part thereof may be obtained with a communication microphone of the interface 24 in third communication device 12.

In the first communication device 10, the processor circuitry 28 is configured to set up a conference with associated conference requirements, e.g. by transmitting conference invitation or conference request comprising conference requirements to second communication device 20; receive a participation request to participate in the conference from the second communication device, the participation request comprising a device configuration indicative of one or more devices associated with a participant in the conference; determine whether the device configuration satisfies the conference requirements; and in accordance with the device configuration satisfying the conference requirements, include the second communication device 20 in the conference.

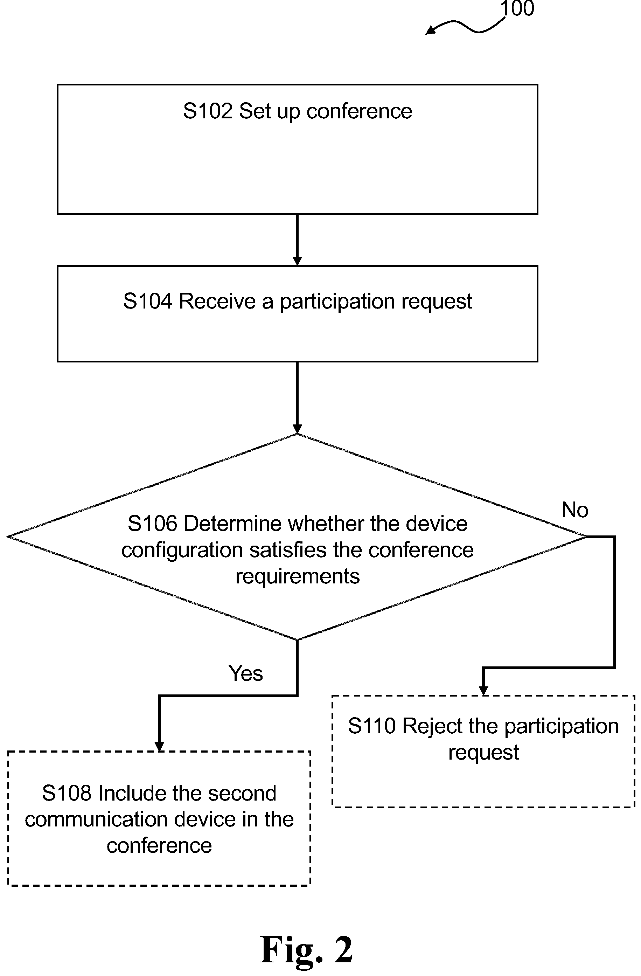

Fig. 2 is a flow diagram of an exemplary method 100 of controlling a conference, e.g. between a first communication device and a second communication device, such as one or more of communication devices 10, 20, 30, according to this disclosure.

The method 100 comprises setting up S102 a conference with associated conference requirements; receiving S104 a participation request to participate in the conference from the second communication device, the participation request comprising a device configuration indicative of one or more devices associated with a participant in the conference; determining S106 whether the device configuration satisfies the conference requirements; and in accordance with the device configuration satisfying the conference requirements, including S108 the second communication device in the conference. The method comprises, in accordance with the device configuration not satisfying the conference requirements, rejecting S110 the participation request.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It may be appreciated that the figures comprise some modules or operations which are illustrated with a solid line and some modules or operations which are illustrated with a dashed line. The modules or operations which are comprised in a solid line are modules or operations which are comprised in the broadest example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented. Furthermore, it should be appreciated that not all of the operations need to be performed. The example operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the example embodiments may be implemented at least in part by means of both hardware and software, and that several "means", "units" or "devices" may be represented by the same item of hardware.

The various example methods, devices, and systems described herein are described in the general context of method steps processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform specified tasks or implement specific abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

## Claims

1. A method of controlling a conference between a first communication device and a second communication device, the method comprising:
setting up a conference with associated conference requirements;
receiving a participation request to participate in the conference from the second communication device, the participation request comprising a device configuration indicative of one or more devices associated with a participant in the conference;
determining whether the device configuration satisfies the conference requirements; and
in accordance with the device configuration satisfying the conference requirements, including the second communication device in the conference.

2. Method according to claim 1, the method comprising, in accordance with the device configuration not satisfying the conference requirements, rejecting the participation request.

3. Method according to any one of claims 1-2, wherein setting up a conference with associated conference requirements comprises transmitting a conference invitation comprising the conference requirements.

4. Method according to any one of claims 1-3, wherein the conference requirements comprise audio device requirements of an audio device for participating in the conference, and wherein determining whether the device configuration satisfies the conference requirements comprises determining whether an audio device parameter of the device configuration satisfies the audio device requirements.

5. Method according to claim 4, wherein the audio device requirements comprise audio device type requirements indicative of a required audio device type, and wherein determining whether the device configuration satisfies the conference requirements comprises determining whether an audio device type parameter of the device configuration satisfies the audio device type requirements.

6. Method according to any one of claims 1-5, wherein the conference requirements comprise video device requirements of a video device for participating in the conference, and wherein determining whether the device configuration satisfies the conference requirements comprises determining whether a video device parameter of the device configuration satisfies the video device requirements.

7. Method according to claim 6, wherein the video device requirements comprise video device type requirements indicative of a required video device type, and wherein determining whether the device configuration satisfies the conference requirements comprises determining whether a video device type parameter of the device configuration satisfies the video device type requirements.

8. Method according to any one of claims 1-7, wherein the conference requirements comprise communication device requirements of a communication device for participating in the conference, and wherein determining whether the device configuration satisfies the conference requirements comprises determining whether a communication device parameter of the device configuration satisfies the communication device requirements.

9. Method according to claim 8, wherein the communication device requirements comprise communication device type requirements indicative of a required communication device type, and wherein determining whether the device configuration satisfies the conference requirements comprises determining whether a communication device type parameter of the device configuration satisfies the communication device type requirements.

10. Electronic device comprising an interface, memory circuitry, and processor circuitry, the processor circuitry configured to perform the method according to any one of claims 1-9.

11. Electronic device according to claim 10, wherein the electronic device is a communication device.

12. Electronic device comprising an interface, memory circuitry, and processor circuitry, the processor circuitry configured to:
set up a conference with associated conference requirements;
receive a participation request to participate in the conference from the second communication device, the participation request comprising a device configuration indicative of one or more devices associated with a participant in the conference;
determine whether the device configuration satisfies the conference requirements; and
in accordance with the device configuration satisfying the conference requirements, include the second communication device in the conference.

13. Electronic device according to claim 12, wherein the electronic device is a communication device or an audio device.
